(19) Europäisches Patentamt
European Patent Office
Office européen des brevets

(11) **EP 3 038 248 B1**

(12) # EUROPEAN PATENT SPECIFICATION

(45) Date of publication and mention
of the grant of the patent:
**13.05.2020 Bulletin 2020/20**

(51) Int Cl.:
**H02P 6/18** *(2016.01)*    **H02P 21/26** *(2016.01)*
**H02P 21/18** *(2016.01)*

(21) Application number: **15201524.4**

(22) Date of filing: **21.12.2015**

(54) **MOTOR DRIVING APPARATUS AND LAUNDRY TREATMENT MACHINE INCLUDING THE SAME**

MOTORANTRIEBSVORRICHTUNG UND WÄSCHEBEHANDLUNGSMASCHINE DAMIT

DISPOSITIF D'ENTRAÎNEMENT DE MOTEUR ET MACHINE DE TRAITEMENT DU LINGE COMPRENANT CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2014 KR 20140186140**

(43) Date of publication of application:
**29.06.2016 Bulletin 2016/26**

(73) Proprietors:
• **LG Electronics Inc.**
**Seoul 07336 (KR)**
• **IUCF-HYU (Industry-University Cooperation Foundation Hanyang University)**
**Seoul 04763 (KR)**

(72) Inventors:
• **JOO, Jaehoon**
**Seoul 08592 (KR)**
• **LEE, Chungill**
**Seoul 08592 (KR)**

• **KIM, Raeyoung**
**Seoul 06004 (KR)**
• **KIM, Sangil**
**Kyunggi-do 16707 (KR)**

(74) Representative: **Ter Meer Steinmeister & Partner Patentanwälte mbB**
**Nymphenburger Straße 4**
**80335 München (DE)**

(56) References cited:
WO-A1-2009/057841    WO-A1-2014/010063
US-A1- 2004 070 360    US-A1- 2008 272 732

• **SUNGHO JUNG ET AL: "Sensorless control of AC machines at carrier frequency signal injection using analog filter circuit", POWER ELECTRONICS AND DRIVE SYSTEMS (PEDS), 2013 IEEE 10TH INTERNATIONAL CONFERENCE ON, IEEE, 22 April 2013 (2013-04-22), pages 439-444, XP032420797, DOI: 10.1109/PEDS.2013.6527059 ISBN: 978-1-4673-1790-0**

Description

## BACKGROUND OF THE INVENTION

### 1. Field of the invention

The present invention relates to a motor driving apparatus and a laundry treatment machine including the same, and, more particularly, to a motor driving apparatus capable of compensating for a delay error occurring due to a filter upon position estimation through high-frequency signal injection in a sensorless method and a laundry treatment machine including the same.

### 2. Description of the Related Art

In general, a laundry treatment machine washes laundry using friction force between a tub rotating by driving force of a motor and washing water in a state of putting a detergent, washing water and laundry into a drum, thereby obtaining washing effects in which laundry is barely damaged and laundry is not tangled. In order to drive the drum in the laundry treatment machine, the motor is used.

A method of using high-frequency signal injection in sensorless control of a motor including a permanent magnet has properties better than that of a method of using counter electromotive force at zero speed and at a low speed. However, due to high-frequency signal injection, the level of harmonic current decreases to a level at which a signal to noise ratio (SNR) needs to be considered, and thus it is difficult to accurately measure harmonic current using a cheap analog-to-digital converter. Therefore, recently, methods of measuring harmonic current using a circuit for detecting a specific high-frequency signal using an analog filter have been introduced. However, when the analog filter is used, a measured signal may be delayed.

In SUNGHO JUNG et.al: "Sensorless Control of AC Machines at Carrier Frequency Signal Injection Using Analog Filter Circuit", 10th International Conference on Power Electronics and Drive Systems (PEDS), 22 April 2013, pages 439 to 444, discloses sensorless control of ac machines at carrier frequency signal injection using analog filter circuit that reduce injection voltage levels in salience measurements of a rotor. A SNR ratio is gained by adding the analog filter circuit before Analog to Digital Conversion.

US 2004/070360 A1 discloses a control system for an electric motor including an inverter for providing power to the electric motor, a controller for controlling the inverter, a first motor speed control block in the controller injecting a high frequency signal into the electric motor to determine the speed and position of the electric motor, where the first motor speed control block includes a tuned moving average filter to determine the magnitude of high frequency current in the electric motor.

US 2008/272732 A1 discloses a method for controlling an electric machine via an inverter while compensating for one or more hardware delays. The method includes receiving a control signal, producing a first sampling signal based on the control signal, and adjusting the sampling signal to compensate for a first delay of the one or more hardware delays.

WO 2014/010063 A1 discloses a motor controller which corrects the detection signal output from the position sensor.

WO 2009/057841 A1 discloses a senseless control device which improves the precision of the estimated rotor position by minimizing the zero-current-clamping effect.

## SUMMARY OF THE INVENTION

Therefore, the present invention has been made in view of the above problems, and it is an object of the present invention to provide a motor driving apparatus capable of compensating for a delay error occurring due to a filter upon position estimation through high-frequency signal injection in a sensorless method and a laundry treatment machine including the same.

This object is solved by the subject-matter of the independent claim. Further advantageous embodiments and refinements are described in the respective dependent claims.

A motor driving apparatus includes an inverter to convert a direct current (DC) voltage into an alternating current (AC) voltage and to output the AC voltage to the motor, an output current detector to detect output current flowing in the motor, a filter to filter the detected output current, and an inverter controller to control the inverter, wherein the inverter controller outputs an inverter switching control signal based on high-frequency signal injection, estimates a position of a rotator of the motor based on the filtered output current and a delay compensation value for compensating for filtering delay of the filter, and outputs the inverter switching control signal based on the estimated position.

When a speed of the motor is equal to or less than a first speed, the inverter controller may output the inverter switching control signal based on high-frequency signal injection, may estimate the position of the rotator of the motor based on the filtered output current and the delay compensation value for compensating for filtering delay of the filter and may output the inverter switching control signal based on the estimated position.

The inverter controller may control the delay compensation value to increase as the speed of the motor increases.

The inverter controller may change the frequency of the high-frequency signal upon high-frequency signal injection and may change the delay compensation value according to the changed frequency.

The filter may include a band pass filter.

The delay compensation value may be twice a delay value obtained due to filtering delay of the filter.

The inverter controller may include a position error calculator to calculate a position error of the rotator of the motor based on the filtered output current, a delay compensator to calculate the delay compensation value for compensating for the filtering delay of the filter and an estimator to estimate the position and speed of the rotator of the motor based on the position error and the delay compensation value.

The inverter controller further may include a current command generator to generate a current command value based on the estimated rotator speed and a speed command value, a voltage command generator to generate a voltage command value based on the current command value and the output current flowing in the motor, and a switching control signal output unit to generate and output the inverter switching control signal based on the voltage command value and a high-frequency voltage command value based on high-frequency signal injection.

The motor driving apparatus may further comprise a second filter to filter the detected output current, wherein the voltage command generator may generate the voltage command value based on the output current filtered by the second filter and the current command value.

The filter may pass high-frequency output current corresponding to high-frequency signal injection of the output current, and the second filter may block high-frequency output current of the output current and may pass low-frequency output current.

The rotator position error may increase as the speed of the motor increases, and the inverter controller may control the delay compensation value to increase as the speed of the motor increases.

The motor may be an interior permanent magnet synchronous motor (IPMSM). In accordance with an aspect of the present invention, there is provided a laundry treatment machine including a drum, a motor to rotate the drum and a driving unit to drive the motor, wherein the driving unit includes an inverter to convert a direct current (DC) voltage into an alternating current (AC) voltage and to output the AC voltage to the motor, an output current detector to detect output current flowing in the motor, a filter to filter the detected output current, and an inverter controller to control the inverter, wherein the inverter controller outputs an inverter switching control signal based on high-frequency signal injection, estimates a position of a rotator of the motor based on the filtered output current and a delay compensation value for compensating for filtering delay of the filter, and outputs the inverter switching control signal based on the estimated position.

## BRIEF DESCRIPTION OF THE DRAWINGS

The above and other objects, features and other advantages of the present invention will be more clearly understood from the following detailed description taken in conjunction with the accompanying drawings, in which:

FIG. 1 is a perspective view showing a laundry treatment machine according to one embodiment of the present invention;

FIG. 2 is a block diagram showing the internal configuration of the laundry treatment machine of FIG. 1;

FIG. 3 is a circuit diagram showing a driving unit of FIG. 2;

FIG. 4 is a block diagram showing the internal configuration of an inverter controller of FIG. 3;

FIG. 5 is a block diagram showing the internal configuration of an estimator of FIG. 4; and

FIGS. 6 and 7 are views referred to for describing internal operation of the estimator.

## DETAILED DESCRIPTION OF THE PREFERRED EMBODIMENTS

Exemplary embodiments of the present invention will be described in detail with reference to the attached drawings.

The terms "module" and "unit" attached to describe the names of components are used herein to aid in understanding of the components and thus should not be considered as having specific meanings or roles. Accordingly, the terms "module" and "unit" may be used interchangeably.

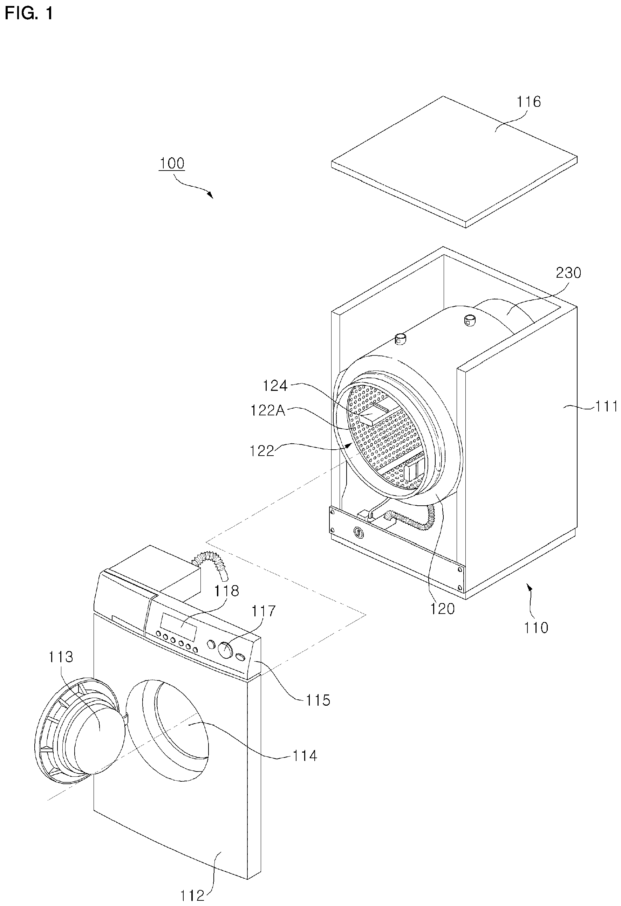

FIG. 1 is a perspective view showing a laundry treatment machine according to one embodiment of the present invention.

Referring to the figure, the laundry treatment machine 100 is a drum type laundry treatment machine, which includes a cabinet 110 forming an appearance of the laundry treatment machine 100, a tub 120 provided in the cabinet 110 and supported by the cabinet 110, a drum 122 which is provided in the tub 120 and in which laundry is washed, a motor 230 for driving the drum 122, a washing water supply device (not shown) provided outside a cabinet body 111 to supply washing water to the cabinet 110, and a drainage device (not shown) formed at the lower side of the tub 120 to drain washing water.

A plurality of openings 122A is formed in the drum 122 to pass washing water and a lifter 124 may be provided on the inner surface of the drum 122 such that laundry is lifted up to a predetermined height and then is dropped by gravity.

The cabinet 110 includes the cabinet body 111, a cabinet cover 112 provided on a front surface of the cabinet body 111 to be coupled to the cabinet body, a control panel 115 provided above the cabinet cover 122 to be coupled to the cabinet body 111, and a top plate 116 provided above the control panel 115 to be coupled to the cabinet body 111.

The cabinet cover 112 includes a laundry inlet 114, through which laundry is put into and taken out of the washing machine, and a door 113 rotatably provided such that the laundry inlet 114 is opened or closed.

The control panel 115 includes operation keys 117 for controlling an operation state of the laundry treatment machine 100 and a display 118 provided at one side of the operation keys 117 to display the operation state of the laundry treatment machine 100.

The operation keys 117 and the display 118 of the control panel 115 are electrically connected to a controller (not shown) and the controller (not shown) electrically controls the components of the laundry treatment machine 100. Operation of the controller (not shown) will be described later.

The drum 122 may include an auto balance (not shown). The auto balance (not shown) reduces vibrations generated according eccentricity of laundry contained in the drum 122 and may be implemented by a liquid balance, a ball balance, etc.

Although not shown in the figure, the laundry treatment machine 100 may further include a vibration sensor for measuring vibrations of the drum 122 or vibrations of the cabinet 110.

The laundry treatment machine 100 of FIG. 1 may be a washing machine for washing laundry or a drier for drying laundry.

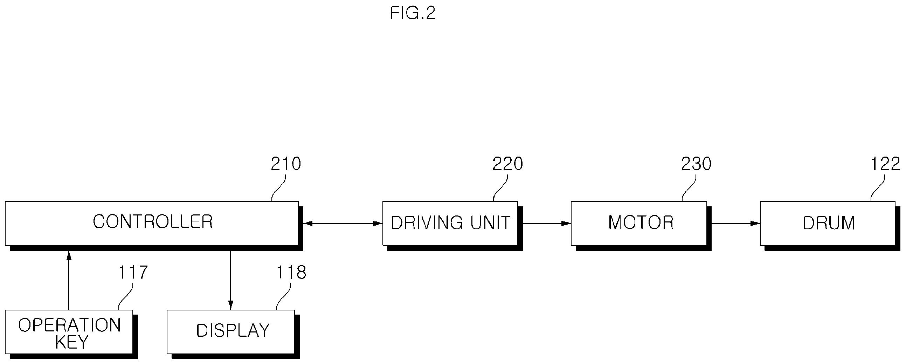

FIG. 2 is a block diagram showing the internal configuration of the laundry treatment machine of FIG. 1.

Referring to the figure, in the laundry treatment machine 100, the driving unit 220 is controlled by control operation of the controller 210 and the driving unit 220 drives the motor 230. Therefore, the drum 122 rotates by the motor 230.

The controller 210 may operate according an operation signal from the operation keys 117 so as to perform washing, rinsing and dehydrating cycles.

In addition, the controller 210 controls the display 118 so as to display a washing course, a washing time, a dehydrating time, a rinsing time, a current operation state, etc.

The controller 210 controls the driving unit 220 to operate the motor 230. For example, according to a sensorless method, the controller may control the driving unit 220 to rotate the motor 230 based on output current flowing in the motor 230. Although the detected current and the sensed position signal are shown as being input to the driving unit 220 in the figure, the present invention is not limited thereto and the detected current and the sensed position signal may be input to the controller 210 or the controller 210 and the driving unit 220.

The driving unit 220 drives the motor 230 and operates without a sensor for sensing a position, such as a Hall sensor, that is, in a sensorless manner.

The driving unit 220 may include an inverter (not shown) and an inverter controller (not shown). In addition, the driving unit 220 may further include a converter for supplying a DC voltage to the inverter (not shown).

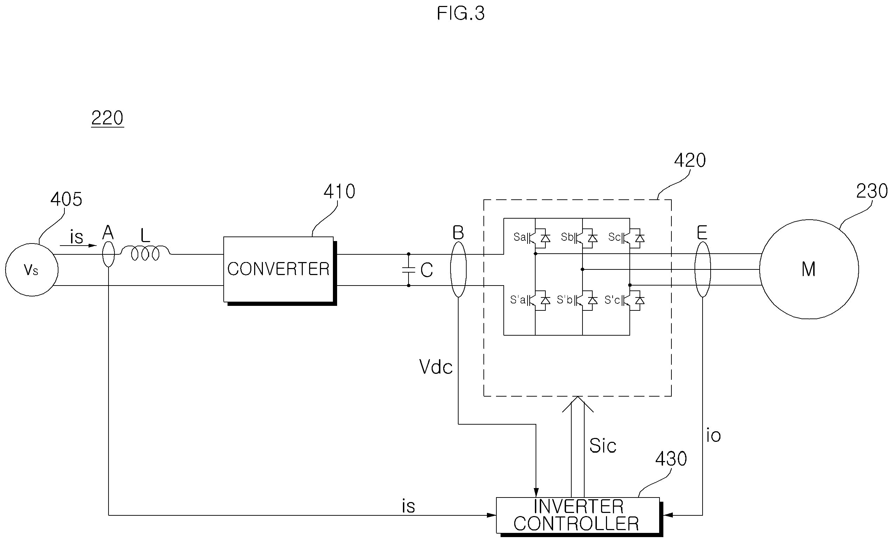

For example, when the inverter controller (not shown) outputs a pulse width modulation (PWM) switching control signal (Sic of FIG. 3) to the inverter (not shown), the inverter (not shown) may perform a high-speed switching operation to supply an AC voltage having a predetermined frequency to the motor 230.

The sensorless type driving unit 220 will be described later with reference to FIG. 3.

The controller 210 may sense the amount of laundry based on current $i_o$ detected by an output current detector (E of FIG. 3). For example, when the drum 122 is accelerated, the amount of laundry may be sensed based on the current value $i_o$ of the motor 230.

The controller 210 may sense eccentricity of the drum 122, that is, unbalance UB of the drum 122. For example, while the drum 122 rotates at a constant speed, eccentricity may be sensed based on the current value $i_o$ of the motor 230. In particular, eccentricity may be sensed based on a ripple component of current $i_o$ detected by the output current detector (E of FIG. 3) or change in rotation speed of the drum 122.

The driving unit 220 according to the embodiment of the present invention is a sensorless type motor driving apparatus.

The method of driving the motor including a permanent magnet may be divided into a sensor method of detecting the position of the rotator of the motor using a sensor such as a Hall sensor and a sensorless method of estimating the position of the rotator of the motor based on output current flowing in the motor without a Hall sensor.

In order to estimate the position of the rotator of the motor using the sensorless method, output current is detected and the analog signal of the output current should be converted into a digital signal by an analog-to-digital converter (ADC). In addition, the digital signal of the output current may be filtered using a filter. Based on the filtered digital signal of the output current, the inverter controller 430 may estimate the position of the rotator of the motor 230 and output the inverter switching control signal Sic to the inverter 420, through rotator speed estimation, current command value generation, voltage command value generation, etc., based on the estimated position of the rotator.

When the speed of the rotator of the motor 230 such as an interior permanent magnet synchronous motor (IPMSM) is low, the detected output current value and an actual current value are different, such that it is difficult to accurately estimate the position of the rotator of the motor.

When the speed of the rotator of the motor 230 is low, in order to accurately estimate the position of the rotator of the motor, a method of detecting counter electromotive force generated by the motor 230 to estimate the position of the rotator of the motor and a method of injecting a high-frequency signal to include a high-frequency component in output current are used.

In the sensorless method, when the speed of the rotator of the motor 230 is low, the method of injecting the high-frequency signal to include the high-frequency component in the output current is more efficient than the method of detecting counter electromotive force generated by the motor 230 to estimate the position of the rotator of the motor.

However, due to high-frequency signal injection, the level of harmonic current decreases to a level at which a signal to noise ratio (SNR) needs to be considered and it is difficult to accurately measure the harmonic current using a cheap analog-to-digital converter. Therefore, recently, methods of measuring harmonic current using a circuit for detecting a specific high-frequency signal using an analog filter, more particularly, a band pass filter (BPF), have been introduced. However, when the analog filter is used, a measured signal may be delayed.

Therefore, the driving unit 220 according to the embodiment of the present invention compensates for a delay error occurring due to the filter upon position estimation through high-frequency signal injection in the sensorless method.

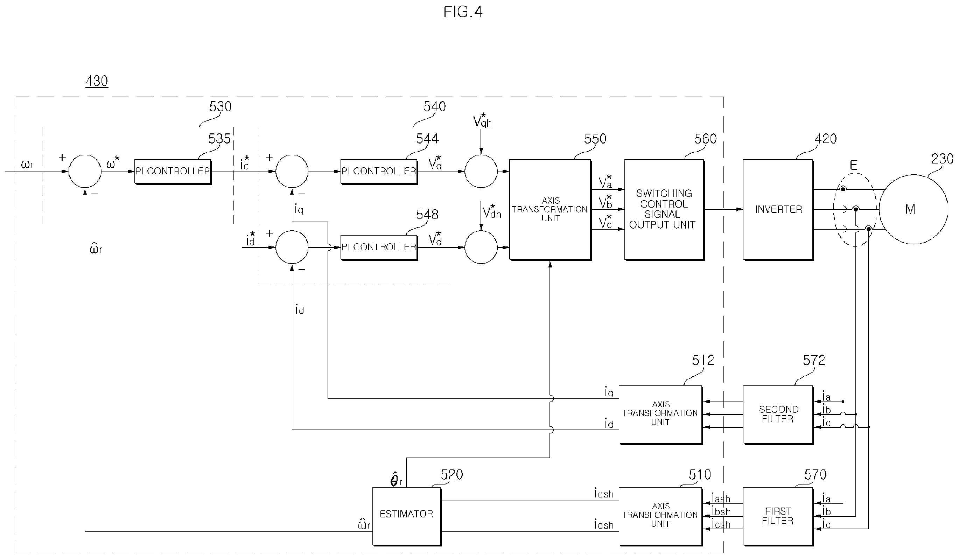

Such delay tends to increase as the quality factor of the BPF increases or as the speed or frequency of the motor increases. In the present invention, a method of accurately calculating a delay value due to the BPF and compensating for a rotator position error to more accurately perform sensorless control is proposed. This method will be described in detail using the circuit diagram of the driving unit of FIG. 3 and the block diagram of the driving unit of FIG. 4.

FIG. 3 is a circuit diagram showing a driving unit of FIG. 2.

Referring to the figure, the driving unit 220 may include a converter 410, an inverter 420, an inverter controller 430, a dc end voltage detector B, a smoothing capacitor C and an output current detector E. In addition, the driving unit 220 may further include an input current detector A, a reactor L, etc.

The reactor L is provided between a commercial AC power source 405 $v_s$ and the converter 410 to perform power factor correction or boosting operation. In addition, the reactor L may perform a function for limiting harmonic current by high-speed switching of the converter 410.

The input current detector A may detect input current $i_s$ received from the commercial AC power source 405. As the input current detector A, a current transformer (CT), a shunt resistor, etc. may be used. The detected input current $i_s$ is a pulse-shaped discrete signal and may be input to the inverter controller 430.

The converter 410 converts the voltage of the commercial AC power source 405 passing through the reactor L into a DC voltage and outputs the DC voltage. Although the voltage of the commercial AC power source 405 is shown as a single-phase AC voltage in the figure, the voltage of the commercial AC power source 405 may be a three-phase AC voltage. The internal structure of the converter 410 is changed according to the type of the commercial AC power source 405.

The converter 410 includes a diode without a switching element and may perform rectification without separate switching operation.

For example, in case of a single-phase AC voltage, four diodes may be used in the form of a bridge. In case of a three-phase AC voltage, six diodes may be used in the form of a bridge.

As the converter 410, a half-bridge type converter, in which two switching elements and four diodes are connected, may be used. In case of a three-phase AC voltage, six switching elements and six diodes may be used.

When the converter 410 includes the switching elements, boosting operation, power factor improvement and DC voltage conversion may be performed by the switching operation of the switching elements.

The smoothing capacitor C smoothes the received voltage and stores the smoothed voltage. Although one smoothing capacitor C is shown in the figure, a plurality of smoothing capacitors may be provided to ensure element stability.

Although the smoothing capacitor is shown as being connected to the output terminal of the converter 410, the present invention is not limited thereto and a DC voltage may be directly input to the smoothing capacitor. For example, the DC voltage from a solar cell may be directly input to the smoothing capacitor C or may be DC/DC converted and input to the smoothing capacitor C. Hereinafter, the components shown in the figure will be focused upon.

Since the DC voltage is stored in the smoothing capacitor C, both ends of the smoothing capacitor may be referred to as DC ends or dc link ends.

The dc end voltage detector B may detect a dc end voltage Vdc across the smoothing capacitor C. The dc end voltage detector B may include a resistor, an amplifier, etc. The detected dc end voltage Vdc is a pulse-shaped discrete signal and may be input to the inverter controller 430.

The inverter 420 includes a plurality of inverter switching elements and may convert the dc voltage Vdc smoothed by the on/off operation of the switching element into three-phase AC voltages va, vb and vc having a predetermined frequency and output the three-phase AC voltages to the three-phase synchronous motor 230.

In the inverter 420, upper-arm switching elements Sa, Sb and Sc and lower-arm switching elements S'a, S'b and S'c respectively connected in series form respective pairs and a total of three pairs of upper-arm and lower-arm switching elements are connected in parallel (Sa&S'a, Sb&S'b, Sc&S'c). A diode is connected to each switching element Sa, S'a, Sb, S'b, Sc or S'c in anti-parallel.

The switching elements of the inverter 420 are turned on/off based on the inverter switching control signal Sic from the inverter controller 430. Therefore, the three-phase AC voltages having the predetermined frequency are output to the three-phase synchronous motor 230.

The inverter controller 430 may control the switching operation of the inverter 420. The inverter controller 430 may receive the output current $i_o$ detected by the output current detector E.

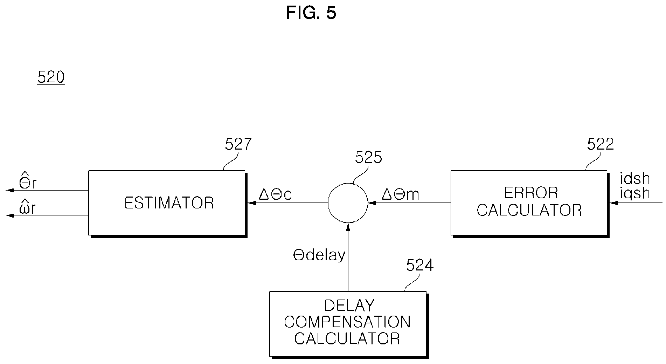

The inverter controller 430 outputs the inverter switching control signal Sic to the inverter 420 in order to control the switching operation of the inverter 420. The inverter switching control signal Sic is a pulse width modulation (PWM) switching control signal and is generated and output based on the output current value $i_o$ detected by the output current detector E. The operation for outputting the inverter switching current value $i_o$ from the inverter controller 430 will be described later in detail with reference to FIG. 5.

The output current detector E detects the output current $i_o$ flowing between the inverter 420 and the three-phase motor 230, that is, current flowing in the motor 230. The output current detector E may detect output current ia, ib or ic of each phase or two-phase output current using ternary phase equilibrium.

The output current detector E may be located between the inverter 420 and the motor 230 and a current transformer (CT), a shunt resistor, etc. may be used for current detection.

If the shunt resistor is used, three shunt resistors may be located between the inverter 420 and the synchronous motor 230 or one end of each thereof may be respectively connected to the three low-arm switching elements S'a, S'b and S'c of the inverter 420. Using ternary phase equilibrium, two shunt resistors may be used. When one shunt resistor is used, the shunt resistor may be located between the capacitor C and the inverter 420.

The detected output current $i_o$ is a pulse-shaped discrete signal and may be applied to the inverter controller 430 and the inverter switching control signal Sic is generated based on the detected output current $i_o$. Hereinafter, the detected output current $i_o$ is referred to as three-phase output currents ia, ib and ic.

The three-phase motor 230 includes a stator and a rotator. The AC voltage of each phase having the predetermined frequency are applied to the coil of the stator of each phase a, b or c so as to rotate the rotator.

The motor 230 may include a surface-mounted permanent-magnet synchronous motor (SMPMSM), an interior permanent magnet synchronous motor (IPMSM), etc., for example.

When the converter 410 includes a switching element, the inverter controller 430 may control the switching operation of the switching element of the converter 410. The inverter controller 430 may receive the input current $i_s$ detected by the input current detector A. The inverter controller 430 may output a converter switching control signal Scc to the converter 410 in order to control the switching operation of the converter 410. The converter switching control signal Scc is a pulse width modulation (PWM) switching control signal and may be generated and output based on the input current $i_s$ detected by the input current detector A.

According to the embodiment of the present invention, the inverter controller 420 outputs the inverter switching control signal Sic to the inverter 410 based on high-frequency signal injection, estimates the position of the rotator of the motor 230 based on a delay compensation value for compensating for filtering delay of the filter 570 and the filtered output current, and outputs the inverter switching control signal Sic based on the estimated position.

The inverter controller 420 outputs the inverter switching control signal Sic to the inverter 420 based on high-frequency signal injection when the speed of the motor 230 is equal to or less than a first speed (about 50 rpm), estimates the position of the rotator of the motor 230 based on a delay compensation value for compensating for filtering delay of the filter 570 and the filtered output current, and outputs the inverter switching control signal Sic based on the estimated position.

The inverter controller 420 may increase the delay compensation value as the speed of the motor 230 increases.

The inverter controller 420 may change the frequency of the high-frequency signal upon high-frequency signal injection and change the delay compensation value according to the changed frequency.

FIG. 4 is a block diagram showing the internal configuration of the inverter controller of FIG. 3, and FIG. 5 is a block diagram showing the internal configuration of an estimator of FIG. 4.

First, referring to FIG. 4, the inverter controller 430 may include a first axis transformation unit 510, a second axis transformation unit 512, an estimator 520, a current command generator 530, a voltage command generator 540, a third axis transformation unit 550 and a switching control signal output unit 560.

The output current detector E detects output currents $i_a$, $i_b$ and $i_c$ flowing in the motor 230 and the output currents $i_a$, $i_b$ and $i_c$ are supplied to a first filter 570 and a second filter 572, both of which are analog filters.

The first filter 570 may include a band pass filter (BPF). The first filter 570 may pass high-frequency output current, that is, high-order harmonic current, corresponding to high-frequency signal injection of the output currents $i_a$, $i_b$ and $i_c$. The output current filtered by the first filter 570 is used to estimate the position of the rotator. At this time, the position of the rotator is estimated based on the delay compensation value for compensating for the filtering delay of the filter 570.

The second filter 572 may include a low pass filter (LPF). The second filter 572 may block the high-frequency output current of the output currents $i_a$, $i_b$ and $i_c$ and pass low-frequency output current. The output current filtered by the second filter 572 is used to generate the voltage command in the voltage command generator 540.

The first axis transformation unit 510 may receive the three-phase output currents $i_a$, $i_b$ and $i_c$ filtered by the first filter 570 and convert the three-phase output currents into two-phase currents $i_{dsh}$ and $i_{qsh}$ of a rotating coordinate system. The converted two-phase currents $i_{dsh}$ and $i_{qsh}$ are supplied to the estimator 520.

The second axis transformation unit 512 may receive the three-phase output currents $i_a$, $i_b$ and $i_c$ filtered by the second filter 572 and convert the three-phase output currents into two-phase currents $i_d$ and $i_q$ of a rotating coordinate system. The converted two-phase currents $i_d$ and $i_q$ are supplied to the voltage command generator 540.

The estimator 520 estimates the position of the rotator of the motor 230 and the speed of the rotator, based on the two-phase currents $i_{dsh}$ and $i_{qsh}$ of the rotating coordinate system from the first axis transformation unit 510. The detailed operation of the estimator 520 will be described with reference to FIG. 5.

The estimator 520 may output an estimated position $\hat{\theta_r}$ and an estimated speed $\hat{\omega}$, to the current command generator 530.

The current command generator 530 calculates a speed command value $\omega^*_r$ based on the estimated speed $\hat{\omega_r}$ and a target speed $\omega_r$ and generates a current command value $i^*_q$ based on the speed command value $\omega^*_r$. For example, the current command generator 530 may perform PI control in a PI controller 535 based on the speed command value $\omega^*_r$ which is a difference between the estimated speed $\hat{\omega_r}$ and the target speed $\omega_r$ and generate a current command value $i^*_q$. Although the q-axis current command value $i^*_q$ is used as the current command value in the figure, a d-axis current command value i*d may also be generated. The d-axis current command value $i^*_d$ may be set to 0.

The current command generator 530 may further include a limiter (not shown) for limiting the level of the current command value $i^*_q$ so as not to exceed an allowable range.

Next, the voltage command generator 540 generates d-axis and q-axis voltage command values $v^*_d$ and $v^*_q$ based on the d-axis and q-axis currents $i_d$ and $i_q$ axis-transformed to the two-phase rotating coordinate system by the second axis transformation unit 512 and the current command values $i^*_d$ and $i^*_q$ from the current command generator 530. For example, the voltage command generator 540 may perform PI control in the PI controller 544 and generate the q-axis voltage command value $v^*_q$, based on a difference between the q-axis current $i_q$ and the q-axis voltage command value $i^*_q$. In addition, the voltage command generator 540 may perform PI control in the PI controller 548 and generate the d-axis voltage command value $v^*_d$ based on a difference between the d-axis current $i_d$ and the d-axis voltage command value $i^*_d$. The d-axis voltage command value $v^*_d$ may be set to 0 when the d-axis current command value $i^*_d$ is set to 0.

The voltage command generator 540 may further include a limiter (not shown) for limiting the levels of the d-axis and q-axis voltage command values $v^*_d$ and $v^*_q$ so as not to exceed an allowable range.

The generated d-axis and q-axis command values $v^*_d$ and $v^*_q$ are input to the third axis transformation unit 550.

When the speed of the motor 230 is equal to or less than the first speed (about 50 rpm), the high-frequency voltage command values $v^*_{dh}$ and $v^*_{qh}$ may be injected.

Although the high-frequency voltage command values are injected at the output side of the voltage command generator 540 in the figure, the high-frequency voltage command values may be injected into the voltage command generator 540.

The sum of the d-axis and q-axis voltage command values $v^*_d$ and $v^*_q$ and the high-frequency voltage command values $v^*_{dh}$ and $v^*_{qh}$ may be input to the third axis transformation unit 550.

The third axis transformation unit 550 receives the position $\hat{\theta_r}$ calculated by the estimator 520, the d-axis and q-axis voltage command values $v^*_d$ and $v^*_q$ and the high-frequency voltage command values $v^*_{dh}$ and $v^*_{qh}$ and performs axis transformation.

First, the third axis transformation unit 550 transforms the two-phase rotating coordinate system to a two-phase stationary coordinate system. At this time, the position $\hat{\theta_r}$ calculated by the estimator 520 may be used.

The third axis transformation unit 550 transforms the two-phase stationary coordinate system to a three-phase stationary coordinate system. Through such transformation, the axis transformation unit 1050 outputs three-phase output voltage command values $v^*_a$, $v^*_b$ and $v^*_c$.

The switching control signal output 560 generates the PWM inverter switching control signal Sic based on the three-phase output voltage command values $v^*_a$, $v^*_b$ and $v^*_c$ and outputs the PWM inverter switching control signal to the inverter 420.

The output inverter switching control signal Sic may be converted into a gate driving signal by a gate driving unit (not shown) and input to the gate of each switching element of the inverter 420. Therefore, the switching elements Sa, S'a, Sb, S'b, Sc and S'c of the inverter 420 perform the switching operation.

Referring to FIG. 5, the estimator 520 may include a position error calculator 522, a delay compensator 524 and an estimator 527.

The position error calculator 522 may calculate a rotator position error $\Delta\theta_m$ of the motor 230 based on the two-phase currents $i_{dsh}$ and $i_{qsh}$ of the rotating coordinate system from the first axis transformation unit 510.

The delay compensation calculator 524 calculates a delay compensation value $\theta_{delay}$ for compensating for filtering delay of the filter 570.

The estimator 527 estimates the rotator position $\hat{\theta}_r$ and rotator speed $\hat{\omega}_r$ of the motor 230 based on the position error $\Delta\theta_m$ and the delay compensation value $\theta_{delay}$.

The delay compensation value $\theta_{delay}$ will now be described with reference to Equations 1 to 5.

Equation 1 below shows a harmonic current component included in the output current $i_o$ or $i_a$, $i_b$ and $i_c$.

Equation 1

$$i_{ash} = i_{dsh} = \alpha \sin \omega_h t \cdot \sin(\theta_r + \theta_{delay})$$

where, $\alpha$ denotes the level of the harmonic current, iash denotes the current of the phase a of the filtered three-phase currents iash, ibsh and icsh output from the first filter 570, $i_{dsh}$ denotes the d-axis current axis-transformed by the first axis transformation unit 510, $\omega_h$ denotes the speed component of the injected high-frequency voltage command value, $\theta_r$ denotes the position of the rotator, and $\theta_{delay}$ denotes a time delay difference generated in the first filter 570.

When harmonic current is detected using an analog band pass filter in order to increase a signal to noise ratio (SNR), delay occurs according to the rotation speed of the motor and the quality factor of the circuit. This delay particularly occurs by the band pass filter. Signal delay occurring by the analog filter, that is, the BPF, causes a rotator position error. The rotator position error increases as the speed of the motor 230 increases and as the quality factor of the circuit increases.

Equation 2 below shows inverse Laplace transformation of the band pass filter output of cos$\omega$st.

Equation 2

$$L^{-1}\left(2\xi\omega_c \cdot \frac{s}{s^2 + 2\xi\omega_c s + \omega_c^2} \cdot \frac{s}{s^2 + \omega_s^2}\right)$$

cosine term

$$= 2\xi\omega_c \cdot \left\{ \frac{\omega_s}{\sqrt{(\omega_c^2 - \omega_s^2)^2 + (2\xi\omega_c\omega_s)^2}} \cos\left(\omega_s t + \cos^{-1}\left(\frac{2\xi\omega_c\omega_s}{\sqrt{(\omega_c^2 - \omega_s^2)^2 + (2\xi\omega_c\omega_s)^2}}\right)\right) \right.$$
$$+ a \cdot \omega_s \cdot \cos\left(\omega_c\sqrt{(1-\xi^2)}t\right) \cdot e^{-\frac{\omega_b}{2}} - a \cdot \omega_s \cdot \frac{\xi}{\sqrt{(1-\xi^2)}}\sin\left(\omega_c\sqrt{(1-\xi^2)}t\right) \cdot e^{-\frac{\omega_b}{2}}$$
$$\left. + \frac{b \cdot \omega_s}{\sqrt{(1-\xi^2)}}\sin\left(\omega_c\sqrt{(1-\xi^2)}t\right) \cdot e^{-\frac{\omega_b}{2}} \right\}$$

exponential term

$$\approx \frac{2\xi\omega_c\omega_s}{\sqrt{(\omega_c^2 - \omega_s^2)^2 + (2\xi\omega_c\omega_s)^2}}\cos\left(\omega_s t + \cos^{-1}\left(\frac{2\xi\omega_c\omega_s}{\sqrt{(\omega_c^2 - \omega_s^2)^2 + (2\xi\omega_c\omega_s)^2}}\right)\right)$$

$$= \frac{2\xi\omega_c\omega_s}{\sqrt{(\omega_c^2 - \omega_s^2)^2 + (2\xi\omega_c\omega_s)^2}}\cos\left(\omega_s t + \sin^{-1}\left(\frac{(\omega_c^2 - \omega_s^2)^2}{\sqrt{(\omega_c^2 - \omega_s^2)^2 + (2\xi\omega_c\omega_s)^2}}\right)\right)$$

Equation 2 may be divided into a cosine term and an exponential term as described above. The exponential term disappears when the bandwidth $\omega_b$ of the band pass filter is sufficiently large and thus is ignorable in a time-varying function.

Accordingly, as shown in Equation 2, delay occurring by the band pass filter may be obtained.

Here, a and b are shown in Equation 3.

Equation 3

$$a = \frac{2\xi\omega_c\omega_s}{\sqrt{(\omega_c^2 - \omega_s^2)^2 + (2\xi\omega_c\omega_s)^2}},$$

$$b = \frac{(\omega_c^2 - \omega_s^2)^2}{\sqrt{(\omega_c^2 - \omega_s^2)^2 + (2\xi\omega_c\omega_s)^2}}$$

where, a denotes an internal variable of arc cosine and b denotes an internal variable of arc sine.

Harmonic current of the high-frequency voltage command value may be expressed by the term $\sin\omega_h t \cdot \sin\omega_r t$ as shown in Equation 1 and delay occurring by the band pass filter of this function is shown in Equation 4 below.

Equation 4

$$L^{-1}\left(2\xi\omega_h \cdot \frac{s}{s^2+2\xi\omega_h s+\omega_h^2}\cdot L\big(\sin\omega_h t \cdot \sin\omega_r t\big)\right)$$

$$=L^{-1}\left(2\xi\omega_h \cdot \frac{s}{s^2+2\xi\omega_h s+\omega_h^2}\cdot L\left\{\frac{\cos(\omega_h-\omega_r)t-\cos(\omega_h+\omega_r)t}{2}\right\}\right)$$

$$\approx 0.5\times\left[\begin{array}{c}\{A^2\cos((\omega_h-\omega_r)t)+AB\sin((\omega_h-\omega_r)t)\}\\-\{C^2\cos((\omega_h-\omega_r)t)+CD\sin((\omega_h-\omega_r)t)\}\end{array}\right]$$

$$\approx 0.5\times\left[\begin{array}{c}\{A^2\cos((\omega_h-\omega_r)t)+AB\sin((\omega_h-\omega_r)t)\}\\-\{A^2\cos((\omega_h-\omega_r)t)+AB\sin((\omega_h-\omega_r)t)\}\end{array}\right]$$

$$=A\cdot\sin\omega_h - A\cdot\sin(\omega_r t-\cos^{-1}A)$$

According to Equation 4, the product of the sinusoidal functions having different frequencies may be expressed by a cosine function composed of a sum of and difference between two frequencies.

A, B, C and D of Equation 4 may be expressed by Equation 5 below.

Equation 5

$$A=\frac{2\xi\omega_h(\omega_h-\omega_r)}{\sqrt{(\omega_h^2-(\omega_h-\omega_r)^2)^2+(2\xi\omega_h(\omega_h-\omega_r))^2}},$$

$$B=\frac{-(\omega_h^2-(\omega_h-\omega_r)^2)}{\sqrt{(\omega_h^2-(\omega_h-\omega_r)^2)^2+(2\xi\omega_h(\omega_h-\omega_r))^2}},$$

$$C=\frac{2\xi\omega_h(\omega_h+\omega_r)}{\sqrt{(\omega_h^2-(\omega_h+\omega_r)^2)^2+(2\xi\omega_h(\omega_h+\omega_r))^2}},$$

$$D=\frac{-(\omega_h^2-(\omega_h+\omega_r)^2)}{\sqrt{(\omega_h^2-(\omega_h+\omega_r)^2)^2+(2\xi\omega_h(\omega_h+\omega_r))^2}}$$

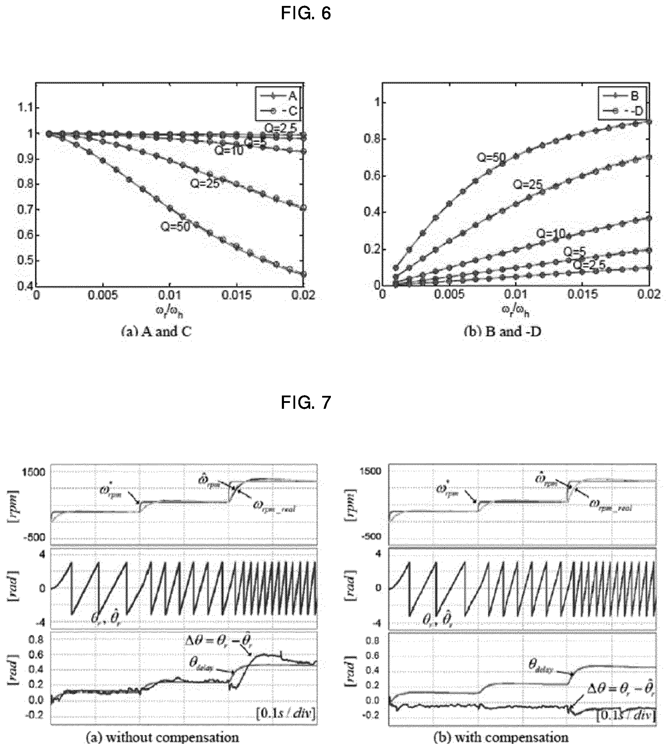

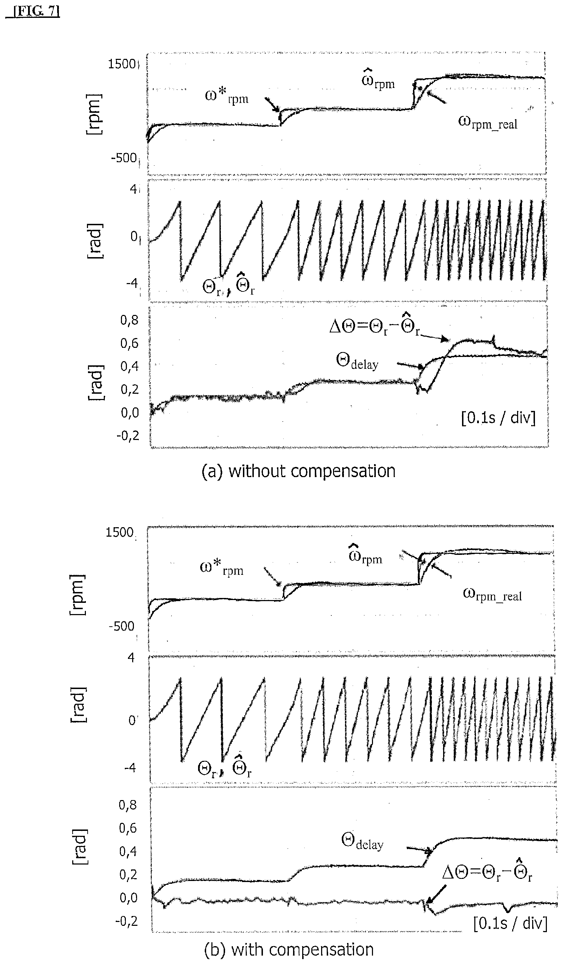

FIG. 6 shows a comparison between A, C, B and -D of Equation 4 or 5 according to the quality factor Q.

Referring to the figure, under the condition of $2\pi \cdot 5k[rad/s]$, A, B, C and -D are compared according to the quality factor Q. According to the figure, A and C, and B and -D may be approximated to be the same.

In particular, when the frequency of the injected signal is significantly greater than the rotation speed or rotation frequency of the motor 230, A and C, and B and -D may be approximated to be the same.

The high-frequency voltage is injected at the delayed position by delay occurring by the band pass filter. Therefore, the delay compensation value should be twice the delay value, for accurate compensation.

Accordingly, by Equation 6, the delay compensation value $\theta_{delay}$ may be calculated.

Equation 6

$$\theta_{delay} = 2 \cdot \cos^{-1} A = 2 \cdot \cos^{-1} \left( \frac{2\xi\omega_h(\omega_h - \omega_r)}{\sqrt{(\omega_h^2 - (\omega_h - \omega_r)^2)^2 + (2\xi\omega_h(\omega_h - \omega_r))^2}} \right)$$

where, A corresponds to A of Equations 4 and 5.

When the motor 230 is an IPMSM and the high-frequency signal is injected in sensorless control, an error of an actual electrical degree $\theta_r$ and an estimated electrical angle $\hat{\theta}_r$ increases by delay of the band pass filter, as the rotation speed or rotation frequency of the motor 230 increases.

FIG. 7 shows before delay compensation (FIG. 7(a)) and after delay compensation (FIG. 7(b)) for the error $\Delta\theta$ of the actual electrical degree $\theta_r$ and the estimated electrical angle $\hat{\theta}_r$.

Referring to the figure, before delay compensation (FIG. 7(a)), whenever the rotation speed of the motor 230 increases stepwise, the error $\Delta\theta$ of the actual electrical degree $\theta_r$ and the estimated electrical angle $\hat{\theta}_r$ increase stepwise.

However, after delay compensation (FIG. 7(b)), whenever the rotation speed of the motor 230 increases stepwise, the error $\Delta\theta$ of the actual electrical degree $\theta_r$ and the estimated electrical angle $\hat{\theta}_r$ decrease stepwise.

In the sensorless method, the delay error occurring due to the filter upon position estimation through high-frequency signal injection may be compensated for. In addition, accurate sensorless control is possible.

As the speed of the motor 230 increases, the delay compensation value $\theta_{delay}$ increases, thereby accurately compensating for the delay error.

The delay compensation calculator 524 may calculate Equations 1 to 6, more particularly, Equations 2 to 6.

The driving unit 220 according to the embodiment of the present invention is applicable to an apparatus including a motor including a permanent magnet embedded therein, in addition to the laundry treatment machine 100. For example, the driving unit 220 according to the embodiment of the present invention is applicable to a refrigerator, a water purifier, an air conditioner, etc.

The motor driving apparatus or the laundry treatment machine including the same according to one embodiment of the present invention includes an inverter to convert a direct current (DC) voltage into an alternating current (AC) voltage and to output the AC voltage to the motor, an output current detector to detect output current flowing in the motor, a filter to filter the detected output current, and an inverter controller to control the inverter. The inverter controller outputs an inverter switching control signal based on high-frequency signal injection, estimates a position of a rotator of the motor based on the filtered output current and a delay compensation value for compensating for filtering delay of the filter, and outputs the inverter switching control signal based on the estimated position, thereby compensating for the delay error due to the filter upon position estimation through high-frequency signal injection in a sensorless method. In addition, accurate sensorless control is possible.

The inverter controller controls the delay compensation value to increase as the speed of the motor increases, thereby accurately compensating for the delay error.

The method of operating the motor driving apparatus according to the foregoing embodiments may be implemented as code that can be written to a processor-readable recording medium included in the motor driving apparatus and can thus be read by a processor. The processor-readable recording medium may be any type of recording device in which data can be stored in a processor-readable manner.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A motor driving apparatus (220) comprising:

   an inverter (420) to convert a direct current, DC, voltage into an alternating current, AC, voltage and to output the AC voltage to a motor (230);
   an output current detector (E) to detect output current flowing in the motor;
   a first analog filter (570) to pass a first output current corresponding to high-frequency signal injection of the detected output current;

**EP 3 038 248 B1**

a second analog filter (572) to block the first output current of the detected output current and to pass a second output current of the detected output current; and
an inverter controller (430) to control the inverter (420),
wherein the inverter controller (430) is configured to:

inject a high-frequency voltage command value at the output side of a voltage command generator;
output an inverter switching control signal based on said high-frequency signal injection,
estimate a position and a rotator speed of a rotator of the motor (230) based on the output current filtered by the first analog filter (570) and a delay compensation value for compensating for delay of the first analog filter (570),
generate a current command value based on the estimated rotator speed and a speed command value,
generate a voltage command value based on the current command value and the second output current filtered by the second analog filter (572), and
output the inverter switching control signal based on the voltage command value and on the high-frequency voltage command value.

2. The motor driving apparatus according to claim 1, wherein, when a speed of the motor (230) is equal to or less than a first speed, the inverter controller (430) is configured to inject a high-frequency voltage command value at the output side of a voltage command generator, output the inverter switching control signal based on said high-frequency signal injection, estimate the position and the rotator speed of the rotator of the motor (230) based on the output current filtered by the first analog filter and the delay compensation value for compensating for delay of the first analog filter (570), generate the current command value based on the estimated rotator speed and the speed command value, generates the voltage command value based on the current command value and the output current filtered by the second analog filter (572); and output the inverter switching control signal based on the voltage command value and on the high-frequency voltage command value.

3. The motor driving apparatus according to any one of preceding claim, wherein the inverter controller (430) is further configured to control the delay compensation value to increase as the speed of the motor (230) increases.

4. The motor driving apparatus according to any one of preceding claim, wherein the inverter controller (430) is further configured to change the frequency of the high-frequency signal upon high-frequency signal injection and to change the delay compensation value according to the changed frequency.

5. The motor driving apparatus according to any one of preceding claim, wherein the first analog filter (570) includes a band pass filter, and the second analog filter (572) includes a low pass filter.

6. The motor driving apparatus according to any one of preceding claim, wherein the delay compensation value is twice the delay of the first analog filter (570).

7. The motor driving apparatus according to any one of preceding claim, wherein the inverter controller (430) includes:

a position error calculator (522) configured to calculate a position error of the rotator of the motor (230) based on the output current filtered by the first analog filter (570);
a delay compensator (524) configured to calculate the delay compensation value for compensating for the delay of the first analog filter (570); and
an estimator (527) configured to estimate the position and speed of the rotator of the motor (230) based on the position error and the delay compensation value.

8. The motor driving apparatus according to claim 7, wherein the inverter controller (430) further includes:

a current command generator (530) configured to generate the current command value based on the estimated rotator speed and a speed command value;
a voltage command generator (540) configured to generate a first voltage command value based on the current command value and the output current filtered by the second analog filter (572); and
a switching control signal output unit (560) configured to generate and output the inverter switching control signal based on the voltage command value and on the high-frequency voltage command value.

9. The motor driving apparatus according to any one of the claims 7 to 8, wherein:

**EP 3 038 248 B1**

the rotator position error increases as the speed of the motor (230) increases, and
the inverter controller (430) is further configured to control the delay compensation value to increase as the speed of the motor (230) increases.

**10.** The motor driving apparatus according to any one of the claims 1 to 9, wherein the motor (230) is an interior permanent magnet synchronous motor (IPMSM).

**11.** A laundry treatment machine (100) comprising the motor driving apparatus according to any one of claims 1 to 10.

**Patentansprüche**

**1.** Motoransteuervorrichtung (220), die Folgendes umfasst:

einen Wechselrichter (420), um eine Gleichspannung (DC) in eine Wechselspannung (AC) umzusetzen und die Wechselspannung an einen Motor (230) auszugeben;
einen Ausgangsstromdetektor (E), um einen Ausgangsstrom zu detektieren, der in dem Motor fließt;
ein erstes analoges Filter (570) zum Hindurchlassen eines ersten Ausgangsstroms in Übereinstimmung mit einer Hochfrequenzsignaleinspeisung des detektierten Ausgangsstroms;
ein zweites analoges Filter (572) zum Blockieren des ersten Ausgangsstroms des detektierten Ausgangsstroms und zum Hindurchlassen eines zweiten Ausgangsstroms des detektierten Ausgangsstroms; und
eine Wechselrichtersteuerung (430) zum Steuern des Wechselrichters (420),
wobei die Wechselrichtersteuerung (430) konfiguriert ist, die folgenden Schritte auszuführen:

Einspeisen eines Hochfrequenz-Spannungssteuerbefehls an der Ausgangsseite eines Spannungsbefehlsgenerators;
Ausgeben eines Wechselrichter-Umschaltsteuersignals auf der Basis der Hochfrequenzsignaleinspeisung, Abschätzen einer Position und einer Rotordrehzahl eines Rotors des Motors (230) auf der Basis des Ausgangsstroms, der durch das erste analoge Filter (570) gefiltert wird, und eines Verzögerungskompensationswerts zum Kompensieren der Verzögerung des ersten analogen Filters (570),
Erzeugen eines Stromsollwerts auf der Basis der abgeschätzten Rotordrehzahl und eines Drehzahlsollwerts,
Erzeugen eines Spannungssollwerts auf der Basis des Stromsollwerts und des zweiten Ausgangsstroms, der durch das zweite analoge Filter (572) gefiltert wird, und
Ausgeben des Wechselrichter-Umschaltsteuersignals auf der Basis des Spannungssollwerts und des Hochfrequenz-Spannungssollwerts.

**2.** Motoransteuervorrichtung nach Anspruch 1, wobei dann, wenn eine Drehzahl des Motors (230) einer ersten Drehzahl entspricht oder kleiner ist, die Wechselrichtersteuerung (430) konfiguriert ist, einen Hochfrequenz-Spannungssollwert an der Ausgangsseite eines Spannungsbefehlsgenerators einzuspeisen, das Wechselrichter-Umschaltsteuersignal auf der Basis der Hochfrequenzsignaleinspeisung auszugeben, die Position und die Rotordrehzahl des Rotors des Motors (230) auf der Basis des Ausgangsstroms, der durch das erste analoge Filter gefiltert wird, und des Verzögerungskompensationswerts zum Kompensieren der Verzögerung des ersten analogen Filters (570) abzuschätzen, den Stromsollwert auf der Basis der abgeschätzten Rotordrehzahl und des Drehzahlsollwerts zu erzeugen, den Spannungssollwert auf der Basis des Stromsollwerts und des Ausgangsstroms, der durch das zweite analoge Filter (572) gefiltert wird, zu erzeugen; und das Wechselrichter-Umschaltsteuersignal auf der Basis des Spannungssollwerts und des Hochfrequenz-Spannungssollwerts auszugeben.

**3.** Motoransteuervorrichtung nach einem der vorhergehenden Ansprüche, wobei die Wechselrichtersteuerung (430) ferner konfiguriert ist, den Verzögerungskompensationswert so zu steuern, dass er zunimmt, wenn die Drehzahl des Motors (230) zunimmt.

**4.** Motoransteuervorrichtung nach einem der vorhergehenden Ansprüche, wobei die Wechselrichtersteuerung (430) ferner konfiguriert ist, die Frequenz des Hochfrequenzsignals bei einer Hochfrequenzsignaleinspeisung zu ändern und den Verzögerungskompensationswert in Übereinstimmung mit der geänderten Frequenz zu ändern.

**5.** Motoransteuervorrichtung nach einem der vorhergehenden Ansprüche, wobei das erste analoge Filter (570) ein Bandpassfilter umfasst und wobei das zweite analoge Filter (572) ein Tiefpassfilter umfasst.

13

**6.** Motoransteuervorrichtung nach einem der vorhergehenden Ansprüche, wobei der Verzögerungskompensationswert das Doppelte der Verzögerung des ersten analogen Filters (570) beträgt.

**7.** Motoransteuervorrichtung nach einem der vorhergehenden Ansprüche, wobei die Wechselrichtersteuerung (430) Folgendes umfasst:

eine Positionsfehler-Berechnungseinheit (522), die konfiguriert ist, einen Positionsfehler des Rotors des Motors (230) auf der Basis des Ausgangsstroms, der durch das erste analoge Filter (570) gefiltert wird, zu berechnen; einen Verzögerungskompensator (524), der konfiguriert ist, den Verzögerungskompensationswert zum Kompensieren der Verzögerung des ersten analogen Filters (570) zu berechnen; und eine Abschätzeinheit (527), die konfiguriert ist, die Position und die Drehzahl des Rotors des Motors (230) auf der Basis des Positionsfehlers und des Verzögerungskompensationswerts abzuschätzen.

**8.** Motoransteuervorrichtung nach Anspruch 7, wobei die Wechselrichtersteuerung (430) ferner Folgendes umfasst:

einen Strombefehlsgenerator (530), der konfiguriert ist, den Stromsollwert auf der Basis der abgeschätzten Rotordrehzahl und eines Drehzahlsollwerts zu erzeugen; einen Spannungsbefehlsgenerator (540), der konfiguriert ist, einen ersten Spannungssollwert auf der Basis des Stromsollwerts und des Ausgangsstroms, der durch das zweite analoge Filter (572) gefiltert wird, zu erzeugen; und eine Umschaltsteuersignal-Ausgabeeinheit (560), die konfiguriert ist, das Wechselrichter-Umschaltsteuersignal auf der Basis des Spannungssollwerts und des Hochfrequenz-Spannungssollwerts zu erzeugen und auszugeben.

**9.** Motoransteuervorrichtung nach einem der Ansprüche 7 bis 8, wobei:

der Rotorpositionsfehler zunimmt, wenn die Drehzahl des Motors (230) zunimmt, und die Wechselrichtersteuerung (430) ferner konfiguriert ist, den Verzögerungskompensationswert so zu steuern, dass er zunimmt, wenn die Drehzahl des Motors (230) zunimmt.

**10.** Motoransteuervorrichtung nach einem der Ansprüche 1 bis 9, wobei der Motor (230) ein Synchronmotor mit innerem Permanentmagneten (IPMSM) ist.

**11.** Wäschebehandlungsmaschine (100), die die Motoransteuervorrichtung nach einem der Ansprüche 1 bis 10 umfasst.

**Revendications**

**1.** Appareil d'entraînement de moteur (220) comportant :

un onduleur (420) pour convertir une tension continue, DC, en une tension alternative, AC, et pour délivrer la tension AC à un moteur (230) ; un détecteur de courant de sortie (E) pour détecter un courant de sortie circulant dans le moteur ; un premier filtre analogique (570) pour faire passer un premier courant de sortie correspondant à une injection de signal à haute fréquence du courant de sortie détecté ; un second filtre analogique (572) pour bloquer le premier courant de sortie du courant de sortie détecté et pour faire passer un second courant de sortie du courant de sortie détecté ; et une commande d'onduleur (430) pour commander l'onduleur (420), dans lequel la commande d'onduleur (430) est configurée pour :

injecter une valeur de commande de tension à haute fréquence du côté de sortie d'un générateur de commande de tension ; délivrer un signal de commande de commutation d'onduleur sur la base de ladite injection de signal à haute fréquence, estimer une position et une vitesse de rotor d'un rotor du moteur (230) sur la base du courant de sortie filtré par le premier filtre analogique (570) et d'une valeur de compensation de retard pour compenser un retard du premier filtre analogique (570), générer une valeur de commande de courant sur la base de la vitesse de rotor estimée et d'une valeur de commande de vitesse,

générer une valeur de commande de tension sur la base de la valeur de commande de courant et du second courant de sortie filtré par le second filtre analogique (572), et

délivrer le signal de commande de commutation d'onduleur sur la base de la valeur de commande de tension et de la valeur de commande de tension à haute fréquence.

2. Appareil d'entraînement de moteur selon la revendication 1, dans lequel, lorsqu'une vitesse du moteur (230) est égale ou inférieure à une première vitesse, la commande d'onduleur (430) est configurée pour injecter une valeur de commande de tension à haute fréquence du côté de sortie d'un générateur de commande de tension, délivrer le signal de commande de commutation d'onduleur sur la base de ladite injection de signal à haute fréquence, estimer la position et la vitesse de rotor du rotor du moteur (230) sur la base du courant de sortie filtré par le premier filtre analogique et de la valeur de compensation de retard pour compenser un retard du premier filtre analogique (570), générer la valeur de commande de courant sur la base de la vitesse de rotor estimée et de la valeur de commande de vitesse, générer la valeur de commande de tension sur la base de la valeur de commande de courant et du courant de sortie filtré par le second filtre analogique (572) ; et délivrer le signal de commande de commutation d'inverseur sur la base de la valeur de commande de tension et de la valeur de commande de tension à haute fréquence.

3. Appareil d'entraînement de moteur selon l'une quelconque des revendications précédentes, dans lequel la commande d'onduleur (430) est en outre configurée pour commander une augmentation de la valeur de compensation de retard lorsque la vitesse du moteur (230) augmente.

4. Appareil d'entraînement de moteur selon l'une quelconque des revendications précédentes, dans lequel la commande d'onduleur (430) est en outre configurée pour faire varier la fréquence du signal à haute fréquence lors d'une injection de signal à haute fréquence et pour faire varier la valeur de compensation de retard en fonction de la fréquence ayant varié.

5. Appareil d'entraînement de moteur selon l'une quelconque des revendications précédentes, dans lequel le premier filtre analogique (570) inclut un filtre passe-bande, et le second filtre analogique (572) inclut un filtre passe-bas.

6. Appareil d'entraînement de moteur selon l'une quelconque des revendications précédentes, dans lequel la valeur de compensation de retard est égale au double du retard du premier filtre analogique (570).

7. Appareil d'entraînement de moteur selon l'une quelconque des revendications précédentes, dans lequel la commande d'onduleur (430) inclut :

un calculateur d'erreur de position (522) configuré pour calculer une erreur de position du rotor du moteur (230) sur la base du courant de sortie filtré par le premier filtre analogique (570) ;

un compensateur de retard (524) configuré pour calculer la valeur de compensation de retard pour compenser le retard du premier filtre analogique (570) ; et

un estimateur (527) configuré pour estimer la position et la vitesse du rotor du moteur (230) sur la base de l'erreur de position et de la valeur de compensation de retard.

8. Appareil d'entraînement de moteur selon la revendication 7, dans lequel la commande d'onduleur (430) inclut en outre :

un générateur de commande de courant (530) configuré pour générer la valeur de commande de courant sur la base de la vitesse de rotor estimée et d'une valeur de commande de vitesse ;

un générateur de commande de tension (540) configuré pour générer une première valeur de commande de tension sur la base de la valeur de commande de courant et du courant de sortie filtré par le second filtre analogique (572) ; et

une unité de sortie de signal de commande de commutation (560) configurée pour générer et délivrer le signal de commande de commutation d'onduleur sur la base de la valeur de commande de tension et de la valeur de commande de tension à haute fréquence.

9. Appareil d'entraînement de moteur selon l'une quelconque des revendications 7 à 8, dans lequel :

l'erreur de position de rotor augmente lorsque la vitesse du moteur (230) augmente, et

la commande d'onduleur (430) est en outre configurée pour commander une augmentation de la valeur de compensation de retard lorsque la vitesse du moteur (230) augmente.

**10.** Appareil d'entraînement de moteur selon l'une quelconque des revendications 1 à 9, dans lequel le moteur (230) est un moteur synchrone à aimant permanent intérieur (IPMSM).

**11.** Machine de traitement de linge (100) comportant l'appareil d'entraînement de moteur selon l'une quelconque des revendications 1 à 10.

FIG. 1

FIG.2

EP 3 038 248 B1

FIG.3

EP 3 038 248 B1

FIG.4

EP 3 038 248 B1

FIG. 5

520

527

525

522

$\hat{\Theta}$r
$\hat{\omega}$r

ESTIMATOR

$\Delta\Theta$c

$\Delta\Theta$m

ERROR
CALCULATOR

idsh
iqsh

$\Theta$delay

524

DELAY
COMPENSATION
CALCULATOR

FIG. 6

(a) A and C

(b) B and -D

FIG. 7

(a) without compensation

(b) with compensation

[FIG. 7]

(a) without compensation

(b) with compensation

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004070360 A1
- US 2008272732 A1
- WO 2014010063 A1
- WO 2009057841 A1

**Non-patent literature cited in the description**

- **SUNGHO JUNG.** Sensorless Control of AC Machines at Carrier Frequency Signal Injection Using Analog Filter Circuit. *10th International Conference on Power Electronics and Drive Systems (PEDS),* 22 April 2013, 439-444